(19)

**Europäisches Patentamt**
**European Patent Office**
**Office européen des brevets**

(11) **EP 2 230 641 B1**

(12) **EUROPÄISCHE PATENTSCHRIFT**

(45) Veröffentlichungstag und Bekanntmachung des Hinweises auf die Patenterteilung:
**29.06.2016 Patentblatt 2016/26**

(51) Int Cl.:
*G06T 15/08* *(2011.01)*     *G06K 9/00* *(2006.01)*
*G06T 7/00* *(2006.01)*

(21) Anmeldenummer: **09155433.7**

(22) Anmeldetag: **18.03.2009**

(54) **Verfahren zur Ermittlung der Lage einer Struktur in einem Körper**

Method for determination of a pose of a structure in a body

Procédé de détermination de la position d'une structure dans un corps

(84) Benannte Vertragsstaaten:
**DE FR GB**

(43) Veröffentlichungstag der Anmeldung:
**22.09.2010 Patentblatt 2010/38**

(73) Patentinhaber: **Brainlab AG**
**85622 Feldkirchen (DE)**

(72) Erfinder: **Fürst, Armin**
**85551, Kirchheim (DE)**

(74) Vertreter: **Schwabe - Sandmair - Marx**
**Patentanwälte Rechtsanwalt**
**Partnerschaft mbB**
**Joseph-Wild-Straße 20**
**81829 München (DE)**

(56) Entgegenhaltungen:
- **RUSSAKOFF D B ET AL: "Intensity-based 2D-3D spine image registration incorporating a single fiducial marker<1>" ACADEMIC RADIOLOGY, RESTON, VA, US, Bd. 12, Nr. 1, 1. Januar 2005 (2005-01-01), Seiten 37-50, XP025311353 ISSN: 1076-6332 [gefunden am 2005-01-01]**
- **FU D ET AL: "Fiducial-less 2D-3D spine image registration using spine region segmented in CT image" PROGRESS IN BIOMEDICAL OPTICS AND IMAGING - PROCEEDINGS OF SPIE - MEDICAL IMAGING 2007: VISUALIZATION AND IMAGE-GUIDED PROCEDURES 2007 SPIE US, Bd. 6509, Nr. PART 2, 2007, XP002543966**

- **SANSONE M ET AL: "3D pose estimation of biological tissues by means of CT and fluoroscopy" ENGINEERING IN MEDICINE AND BIOLOGY SOCIETY, 2000. PROCEEDINGS OF THE 22ND ANNUAL INTERNATIONAL CONFERENCE OF THE IEEE 23-28 JULY 2000, PISCATAWAY, NJ, USA,IEEE, Bd. 4, 23. Juli 2000 (2000-07-23), Seiten 2426-2427, XP010531111 ISBN: 978-0-7803-6465-3**
- **CHELIKANI S ET AL: "A gradient feature weighted Minimax algorithm for registration of multiple portal images to 3DCT volumes in prostate radiotherapy" INTERNATIONAL JOURNAL OF RADIATION: ONCOLOGY BIOLOGY PHYSICS, PERGAMON PRESS, US, Bd. 65, Nr. 2, 1. Juni 2006 (2006-06-01), Seiten 535-547, XP024897993 ISSN: 0360-3016 [gefunden am 2006-06-01]**
- **ANTONUK L E: "Electronic portal imaging devices: a review and historical perspective of contemporary technologies and research" PHYSICS IN MEDICINE AND BIOLOGY IOP PUBLISHING UK, Bd. 47, Nr. 6, 21. März 2002 (2002-03-21), Seiten R31-R65, XP002543967 ISSN: 0031-9155**
- **RAVI BANSAL ET AL: "Entropy-Based, Multiple-Portal-to-3DCT Registration for Prostate Radiotherapy Using Iteratively Estimated Segmentation" MEDICAL IMAGE COMPUTING AND COMPUTER-ASSISTED INTERVENTION - MIC CAI'99 LECTURE NOTES IN COMPUTER SCIENCE;;LNCS, SPRINGER, BERLIN, DE, Bd. 1679, 1. Januar 2006 (2006-01-01), Seiten 567-578, XP019036207 ISBN: 978-3-540-66503-8**

EP 2 230 641 B1

- **WEESE J ET AL: "Voxel-based 2-D/3-D registration of fluoroscopy images and CT scans for image-guided surgery" IEEE TRANSACTIONS ON INFORMATION TECHNOLOGY IN BIOMEDICINE IEEE USA, Bd. 1, Nr. 4, Dezember 1997 (1997-12), Seiten 284-293, XP002543968 ISSN: 1089-7771**

## Beschreibung

Die vorliegende Erfindung betrifft ein Verfahren, eine Vorrichtung sowie ein Computerprogramm zur Ermittlung der Lage einer Struktur in einem Körper, insbesondere einem menschlichen oder tierischen Körper.

Zur Vorbereitung der Behandlung eines Patienten ist es oftmals notwendig, die genaue Lage einer Struktur in dem Körper zu kennen, insbesondere bezogen auf einen externen Referenzpunkt. Bei der Struktur handelt es sich beispielsweise um einen Tumor, der bestrahlt oder entfernt werden soll. Bei der Struktur kann es sich auch um andere Strukturen wie beispielsweise einen Knochen oder ein Organ handeln.

Der Aufsatz "Intensity-Based 2D-3D-Spine Image Registration Incorporating a Single Fiducial Marker" von Daniel B. Russakoff et al., veröffentlicht in Academic Radiology, Band 12, Nr. 1, offenbart eine 2D-3D-Registrierung, bei der aus einem dreidimensionalen CT-Datensatz digital rekonstruierte Radiogramme (DRR) generiert werden, wobei Ort und Lage des CT-Datensatzes iterativ angepasst werden, bis die Ähnlichkeit zwischen den DRRs und zweidimensionalen Röntgenbildern maximiert wird.

Der Aufsatz "Fiducial-less 2D-3D Spine Image Registration Using Spine Region Segmented in CT Image" von Dongshan Fu, et al., veröffentlicht in Progress in Miomedical Optics and Imaging - Proceedings of Spie - Medical Imaging 2007: Visualization and Image-Guided Procedures 2007, Band 6509, 2007, offenbart ebenfalls eine Bildregistrierung zwischen einem Paar von zweidimensionalen Röntgenbildern und einem dreidimensionalen CT-Datensatz anhand von digital rekonstruierten Radiogrammen (DRR).

Der Aufsatz "A Gradient Feature Weighted Minimax Algorithm for Registration of Multiple Portal Images to 3DCT Volumes in Prostate Radiotherapy" von Sudhakar Chelikani et al., veröffentlicht im International Journal of Radiation: Oncology Biology Physics, Pergamon Press, Band 65, Nr. 2, am 1. Juni 2006 offenbart die Registrierung von aus einem 3D-CT-Datensatz gewonnenen digital rekonstruierten Radiogrammen (DRRs) mit vier zweidimensionalen Röntgenbildern.

Es ist die Aufgabe der vorliegenden Erfindung, ein Verfahren, eine Vorrichtung und ein Computerprogramm bereitzustellen, mit dem oder der die Lage der Struktur in dem Körper einfach, schnell und/oder zuverlässig ermittelt werden kann.

Diese Aufgabe wird gelöst durch das Verfahren nach Patentanspruch 1, die Vorrichtung nach Patentanspruch 11 und das Computerprogramm nach Patentanspruch 14. Vorteilhafte Ausgestaltungsformen sind den abhängigen Ansprüchen zu entnehmen.

Im Rahmen dieses Dokuments bedeutet der Begriff Lage eine Kombination aus der Position und/oder der Orientierung eines Objekts, also des translatorischen und/oder rotatorischen Zustands.

Erfindungsgemäß werden zunächst 3D-Daten bereitgestellt, die eine dreidimensionale Abbildung zumindest des Teils des Körpers, der die Struktur enthält, repräsentieren. Die Lage der Struktur innerhalb der 3D-Daten ist bekannt oder wird ermittelt, beispielsweise automatisch. Bei diesen 3D-Daten handelt es sich bevorzugt um ein dreidimensionales Array von Werten, wobei jeder Wert beispielsweise die Dichte, die Absorptionsfähigkeit gegenüber Röntgenstrahlung oder die Transmissionsfähigkeit gegenüber Röntgenstrahlung eines zugeordneten Raumelements des Körpers repräsentiert. Die 3D-Daten bestehen somit aus einer Vielzahl von Voxeln, die jeweils einem Raumbereich des Körpers zugeordnet sind. Die 3D-Daten werden beispielsweise mittels eines Computertomographen (CT), eines Magnetresonanz-Tomographen (MRT) oder einer sonstigen Vorrichtung zur räumlichen Bildgebung erzeugt. Die Erzeugung der 3D-Daten setzt eine entsprechende Zeitdauer und eine dreidimensionale Bildgebungseinrichtung voraus, so dass eine Erzeugung der 3D-Daten und eine Ermittlung der Lage der Struktur unmittelbar aus diesen Daten direkt vor der Behandlung des Patienten oftmals nicht möglich ist. Die 3D-Daten werden daher bevorzugt im Vorfeld erzeugt und dem erfindungsgemäßen Verfahren zur Ermittlung der Lage der Struktur, das vorteilhaft unmittelbar vor der Behandlung durchgeführt wird, bereitgestellt.

Werden hierin Daten, Regionen, Bereiche oder Bilder "bereitgestellt", so bedeutet dies, dass sie für die Nutzung durch das erfindungsgemäße Verfahren bereit sind. Diesen Zustand des "Bereitstehens" können die Daten oder Bilder z.B. durch Erfassen der Daten oder Bilder (z.B. durch Analysegeräte) oder durch Eingeben der Daten oder Bilder (z.B. über Schnittstellen) erreichen. Die Daten können diesen Zustand auch dadurch haben, dass sie in einem Speicher (z.B. ROM, CD, Festplatte) abgespeichert und so für eine Verwendung im Rahmen des erfindungsgemäßen Verfahrens bereit stehen, z. B. für eine Verwendung durch eine Recheneinheit, wie z. B. einem Computer.

Weiter werden mindestens zwei, insbesondere mindestens drei, 2D-Bilddatensätze bereitgestellt, die jeweils eine Röntgenabbildung eines zumindest die Struktur enthaltenden Teils des Körpers aus einer bekannten Blickrichtung repräsentieren. Die Röntgenabbildungen zeigen die Struktur und den umgebenden Teil des Körpers demnach in verschiedenen Projektionen, deren Lagen zueinander bekannt sind. Die Röntgenabbildungen können unmittelbar vor der Behandlung des Patienten gewonnen werden, so dass sich die Lage des Patienten und somit die Lage der Struktur zwischen der Erzeugung der Röntgenabbildungen und der sich dem erfindungsgemäßen Verfahren anschließenden Behandlung des Patienten nicht verändert.

In einem nächsten Verfahrensabschnitt werden virtuelle Röntgenbilder aus den 3D-Daten für eine virtuelle Lage der 3D-Daten erzeugt, wobei für jede Blickrichtung, für die ein 2D-Bilddatensatz bereitgestellt wurde, ein zugehöriges virtuelles Röntgenbild erzeugt wird. Die virtuelle Lage der 3D-Daten ist beispielsweise auf eine Referenz bezogen, insbesondere die Blickrichtungen der Röntgenabbildungen oder ein Referenz-Koordinatensystem. Die Erzeugung von virtuellen Röntgenbildern, auch als DRR (digitally reconstructed radiograph) bezeichnet, ist aus dem Stand der Technik bekannt. Dabei wird aus den 3D-Daten ein virtuelles Röntgenbild errechnet, das sich ergeben würde, wenn der von den 3D-Daten repräsentierte Körper aus der zugrunde gelegten Richtung geröntgt würde. Die virtuellen Röntgenbilder werden von DRR-Datensätzen repräsentiert, wobei jeder DRR-Datensatz ein virtuelles Röntgenbild enthält. Da für jede Blickrichtung, für die ein 3D-Bilddatensatz bereitgestellt wurde, ein zugehöriges virtuelles Röntgenbild erzeugt wird, stehen nunmehr für jede Blickrichtung sowohl ein reales Röntgenbild als auch ein virtuelles Röntgenbild in Form von Daten bzw. Datensätzen zur Verfügung.

Anschließend werden die DRR-Datensätze, also die virtuellen Röntgenbilder, paarweise mit den zugehörigen 2D-Bilddatensätzen verglichen, was für jedes verglichene Bilderpaar zu einem Ähnlichkeitsmaß führt. Dann wird für die virtuelle Lage der 3D-Daten aus allen Vergleichen ein kumulatives Ähnlichkeitsmaß erzeugt. Das kumulative Ähnlichkeitsmaß ist ein Maß für die Ähnlichkeit bzw. Übereinstimmung aller virtuellen Röntgenbilder mit den zugehörigen 2D-Bilddatensätzen.

Durch die Verwendung von mindestens zwei Bildpaaren wird der Einfluss von Bildrauschen oder unerwünschten Strukturen in den Abbildungen verringert. Je höher die Anzahl der Bildpaare ist, desto zuverlässiger stimmt die ermittelte Lage der Struktur mit der tatsächlichen Lage überein. Mit steigender Anzahl an Bildpaaren steigt jedoch der Aufwand beispielsweise zur Ermittlung der benötigten 2D-Bilddatenssätze. Als Kompromiss zwischen der Zuverlässigkeit der Lageermittlung und dem Aufwand bei der Gewinnung der 2D-Bilddatensätze werden bevorzugt zwischen zwei und zwanzig, insbesondere zwischen zwei oder drei und acht, 2D-Bilddatensätze verwendet.

Im Rahmen des erfindungsgemäßen Verfahrens werden die Schritte des Erzeugens der virtuellen Röntgenbilder, des paarweisen Vergleiches und des Erzeugens des kumulativen Ähnlichkeitsmaßes für verschiedene virtuelle Lagen der 3D-Daten wiederholt. Somit ergibt sich für jede virtuelle Lage der 3D-Daten ein kumulatives Ähnlichkeitsmaß. Schließlich wird die Lage der Struktur im Körper aus derjenigen virtuellen Lage der 3D-Daten, die zu dem größten Ähnlichkeitsmaß führt, ermittelt. Insbesondere wird die Lage der Struktur in dem Köper aus der Lage der 3D-Daten und der Lage der Struktur innerhalb der 3D-Daten ermittelt, beispielsweise bezogen auf einen externen Referenzpunkt oder ein Referenz-Koordinatensystem. Die Blickrichtungen, für die die 2D-Bilddatensätze bereitgestellt wurden, sind insbesondere bezogen auf den Referenzpunkt oder das Referenz-Koordinatensystem bekannt. Da die Blickrichtungen bei der Erzeugung der Röntgenabbildung mit den Blickrichtungen der virtuellen Röntgenbilder übereinstimmen, ist somit die Lage der 3D-Daten und daraus die Lage der Struktur bezogen auf die Blickrichtungen bekannt.

Vorteilhaft repräsentieren die Röntgenabbildungen, die von den 2D-Bilddatensätzen repräsentiert werden, den Körper jeweils im gleichen Zustand. Bei diesem Zustand handelt es sich insbesondere um den Zustand der Atmung, da sich die Lage der Struktur bezogen auf die Referenz möglicherweise während des Atmungszyklus verändert. Eine Möglichkeit, mehrere Röntgenabbildungen während des gleichen Zustands zu erzielen, besteht darin, gleichzeitig mehrere Röntgenabbildungen aus verschiedenen Blickrichtungen zu erzeugen. Dazu ist für jede Blickrichtung ein Röntgenapparat notwendig. Alternativ oder zusätzlich wird der Zustand des Körpers überwacht und die Röntgenabbildungen werden erzeugt oder aus einer Anzahl sequenziell erzeugter Röntgenabbildungen ausgewählt, wenn sich der Körper in einem festgelegten Zustand befindet. Der festgelegte Zustand ist beispielsweise der Zustand, in dem der Patient vollständig ein- oder ausgeatmet hat

In einer Ausgestaltungsform der Erfindung wird das kumulative Ähnlichkeitsmaß als die Summe der einzelnen Ähnlichkeitsmaße der n paarweisen Vergleiche berechnet. Der Parameter n entspricht der Anzahl der 2D-Bilddatensätze. Das kumulative Ähnlichkeitsmaß $F_{cumm}$ berechnet sich dann anhand der Formel

$$F_{cumm}(I_1 \ldots I_n, DRR_1 \ldots DRR_n) = \prod_{i=1}^{n} F(I_i, DRR_i)$$

mit dem Ähnlichkeitsmaß $F(I_i, DRR_i)$ des jeweiligen Bildpaares i, wobei I einen 2D-Bilddatensatz und DRR ein virtuelles Röntgenbild bezeichnet.

Alternativ wird das kumulative Ähnlichkeitsmaß als das Produkt der einzelnen Ähnlichkeitsmaße der n paarweisen Vergleiche berechnet. In diesem Fall berechnet sich das kumulative Ähnlichkeitsmaß $E_{cumm}$ zu

$$F_{cumm}(I_1 \ldots I_n, DRR_1 \ldots DRR_n) = \sum_{i=1}^{n} F(I_i, DRR_i)$$

In einer Ausgestaltungsform der Erfindung geht in das kumulative Ähnlichkeitsmaß zusätzlich ein Strafmaß ein, das von der Abweichung der jeweiligen virtuellen Lage der 3D-Daten von einer Ausgangslage abhängt Die Ausgangslage wird beispielsweise als diejenige virtuelle Lage gewählt, die zu der vermuteten tatsächlichen Lage des Körpers des Patienten korrespondiert. Ist beispielsweise bekannt, dass der Patient auf dem Rücken liegt, so wird durch das Strafmaß verhindert, dass diejenige virtuelle Lage der 3D-Daten zur Ermittlung der Lage der Struktur im Körper herangezogen wird, die zu einer Bauchlage des Patienten korrespondiert. Bei der Einbeziehung des Strafmaßes wird das kumulative Ähnlichkeitsmaß beispielsweise durch das Strafmaß dividiert oder das Strafmaß wird vom kumulativen Ähnlichkeitsmaß subtrahiert.

Bevorzugt wird bei dem paarweisen Vergleichen der virtuellen Röntgenbilder mit den zugehörigen 2D-Bilddatensätzen der Einfluss unerwünschter Strukturen unterdrückt Dies erfolgt beispielsweise dadurch, dass die 3D-Daten vor der Erzeugung der virtuellen Röntgenbilder segmentiert werden. Dabei werden beispielsweise sämtliche Voxel der 3D-Daten, die nicht der gewünschten Struktur zuzuordnen sind, unterdrückt. Die virtuellen Röntgenbilder werden somit ausschließlich aus den 3D-Daten gewonnen, die der gewünschten Struktur zuzuordnen sind.

Alternativ oder zusätzlich werden die virtuellen Röntgenbilder vor dem paarweisen Vergleich maskiert. Dies bedeutet, dass Bereich der virtuellen Röntgenbilder, die die gewünschte Struktur nicht enthalten ausgeblendet werden.

Alternativ oder zusätzlich werden die 3D-Daten in Bereichen, die die Struktur nicht enthalten, vor der Erzeugung der virtuellen Röntgenbilder modifiziert. Dabei werden z. B. die Dichtewerte derjenigen Voxel, die nicht der Struktur zuzuordnen sind, verändert, beispielsweise auf den Wert Null oder den Dichtewert von Wasser gesetzt.

Weiterhin alternativ oder zusätzlich, werden die 3D-Daten vor der Erzeugung der virtuellen Röntgenbilder gefiltert. Beispielsweise wird ein Windowing-Filter angewendet, der den Kontrast der relevanten Dichtewerte in den 3D-Daten erhöht.

Das erfindungsgemäße Verfahren ist insbesondere ein Datenverarbeitungsverfahren. Das Datenverarbeitungsverfahren wird bevorzugt durch technische Mittel, insbesondere einen Computer, durchgeführt. Der Computer umfasst insbesondere einen Prozessor und insbesondere einen Speicher, um insbesondere elektronisch die Daten zu verarbeiten. Insbesondere werden die beschriebenen Schritte wie z. B. die Schritte des Bereitstellens, Wiederholens des Ermittelns, Erzeugens oder Vergleichens von einem Computer ausgeführt. Schritte des Vergleichens von Daten sind insbesondere Schritte des technischen Datenverarbeitungsverfahrens, insbesondere im Rahmen eines Programms, die insbesondere anhand von vorgegebenen Kriterien oder Methoden durchgeführt werden. Schritte des Erzeugens stellen insbesondere eine Berechnung anhand von Daten mittels des Computers dar. Schritte des Ermittelns umfassen insbesondere die Abfrage von Werten, die an einer Schnittstelle des Computers anliegen und die durch technische Mittel, wie z. B. einer Abtasteinrichtung oder Bilderzeugungsvorrichtung, erzeugt wurden. Diese Werte werden insbesondere von der Schnittstelle in Daten umgewandelt, die von dem Computer verarbeitet werden können.

Die Erfindung betrifft weiterhin eine Vorrichtung zur Ermittlung der Lage einer Struktur in einem Körper mit einer Datenschnittstelle und einer Recheneinheit. Die Schnittstelle ist dazu eingerichtet, 3D-Daten zu empfangen, die eine dreidimensionale Abbildung zumindest des Teils des Körpers, der die Struktur enthält, repräsentieren, und mindestens zwei, insbesondere mindestens drei, 2D-Bilddatensätze zu empfangen, die jeweils eine Röntgenabbildung eines zumindest die Struktur enthaltenden Teils des Körpers aus einer bekannten Blickrichtung repräsentieren. Die Recheneinheit ist dazu eingerichtet, virtuelle Röntgenbilder in Form von DRR-Datensätzen aus den 3D-Daten zu erzeugen, wobei für jede Blickrichtung, für die ein 2D-Bilddatensatz bereitgestellt wurde, ein zugehöriges virtuelles Röntgenbild bzw. ein DRR-Datensatz erzeugt wird, die virtuellen Röntgenbilder bzw. DRR-Datensätze paarweise mit den zugehörigen 2D-Bilddatensätzen zu vergleichen und ein kumulatives Ähnlichkeitsmaß aus allen Vergleichen für die virtuelle Lage der 3D-Daten zu erzeugen. Die Recheneinheit ist weiter dazu ausgebildet, die Schritte Erzeugen von virtuellen Röntgenbildern, paarweises Vergleichen und Erzeugen eines kumulativen Ähnlichkeitsmaßes für verschiedene virtuelle Lagen der 3D-Daten zu wiederholen und die Lage der Struktur im Körper aus derjenigen virtuellen Lage der 3D-Daten, die zu dem größten Ähnlichkeitsmaß führt, zu ermitteln. Die Vorrichtung ist demnach dazu ausgebildet, das erfindungsgemäße Verfahren durchzuführen.

In einer Ausgestaltungsform der Erfindung weist die Vorrichtung mindestens zwei Röntgenapparate mit bekannter geometrischer Anordnung zueinander auf. Durch die Verwendung mehrerer Röntgenapparate können 2D-Bilddatensätze aus mehreren Blickrichtungen gleichzeitig gewonnen werden. Aus der bekannten geometrischen Anordnung der Röntgenapparate zueinander sind die Blickrichtungen der 2D-Bilddatensätze bekannt. Im Rahmen der vorliegenden Erfindung werden bevorzugt zwischen zwei und zehn, besonders bevorzugt zwischen drei und fünf Röntgenapparate verwendet.

Alternativ oder zusätzlich weist die Vorrichtung einen Sensor zur Überwachung des Zustands des Körpers auf. Die Bilderzeugung mittels der Röntgenapparate wird in Abhängigkeit des Ausgangssignals des Sensors ausgelöst. Alternativ erzeugen die Röntgenapparate kontinuierlich 2D-Bilddatensätze und anhand des Ausgangssignals des Sensors werden diejenigen 2D-Bilddatensätze ausgewählt, die mit den virtuellen Röntgenbildem verglichen werden. Bei dem Sensor handelt es sich beispielsweise um eine Infrarotkamera, mit der sich z. B. die Brusthebung eines Patienten und damit dessen Atmungszustand überwachen lässt.

Die Erfindung betrifft weiterhin ein Computerprogramm, das, wenn es auf einer Datenverarbeitungsanlage ausgeführt wird, die Datenverarbeitungsanlage dazu veranlasst, das vorstehend beschriebene Verfahren durchzuführen.

Im Rahmen der Erfindung können Computerprogrammelemente von Hardware und/oder Software (dies beinhaltet auch Firmware, im System abgespeicherte Software, Mikrocode usw.) verkörpert werden. Im Rahmen der Erfindung können Computerprogrammelemente die Form eines Computerprogrammprodukts annehmen, das durch ein auf einem Computer verwendbares oder computerlesbares Speichermedium verkörpert werden kann, das auf einem Computer verwendbare oder computerlesbare Programmanweisungen, "Code" oder ein "Computerprogramm" umfasst, die bzw. der bzw. das auf dem genannten Medium zur Verwendung auf oder in Verbindung mit dem System, das die Anweisung ausführt, verkörpert sind bzw. ist. Ein solches System kann ein Computer sein, ein Computer kann eine Datenverarbeitungsvorrichtung mit Mitteln zum Ausführen der Computerprogrammelemente und/oder des erfindungsgemäßen Programms sein. Im Rahmen dieser Erfindung kann ein auf einem Computer verwendbares oder computerlesbares Medium irgendein Medium sein, dass das Programm zur Verwendung auf oder in Verbindung mit dem System, Apparat oder der Einrichtung, das bzw. der bzw. die die Anweisung ausführt, das Programm beinhalten, speichern, übermitteln, verbreiten oder transportieren kann. Das auf einem Computer verwendbare oder computerlesbare Medium kann z.B. ein elektronisches, magnetisches, optisches, elektromagnetisches, Infrarot- oder Halbleiter-System, ein solcher Apparat oder eine solche Einrichtung oder ein Ausbreitungsmedium wie z.B. das Internet sein, ist aber nicht auf diese Aufzählung beschränkt. Das auf einem Computer verwendbare oder computerlesbare Medium könnte sogar z.B. Papier oder ein anderes geeignetes Medium sein, auf das das Programm gedruckt ist, da das Programm elektronisch erfasst werden könnte durch z.B. optisches Scannen des Papiers oder anderen geeigneten Mediums und dann kompiliert, interpretiert oder andernfalls auf geeignete Weise verarbeitet werden könnte. Das Computerprogrammprodukt und jegliche Software und/oder Hardware, das bzw. die hier beschrieben werden, bilden in den beispielhaften Ausführungsformen die verschiedenen Mittel zum Ausführen der Funktionen der Erfindung. Insbesondere kann der Computer bzw. die Datenverarbeitungsvorrichtung eine Hinweisinformationsvorrichtung darstellen, die Mittel zum Ausgeben einer Hinweisinformation beinhaltet. Die Hinweisinformation kann visuell durch ein visuelles Anzeigemittel (z. B. einen Monitor und/oder eine Lampe) und/oder akustisch durch ein akustisches Anzeigemittel (z. B. einen Lautsprecher und/oder eine digitale Sprachausgabeeinrichtung) und/oder taktil durch ein taktiles Anzeigemittel (z. B. ein in ein Instrument eingebautes vibrierendes Element bzw. Vibrationselement) beispielsweise an einen Benutzer ausgegeben werden.

Im Rahmen der Erfindung ist es möglich, mehrere der vorgenannten Merkmale zu Ausgestaltungsformen zu kombinieren und nicht erfindungswesentliche Merkmale wegzulassen.

Die Erfindung soll anhand von Ausführungsbeispielen näher erläutert werden. Dabei zeigt:

Figur 1    eine Anordnung mit vier Röntgenapparaten,
Figur 2    eine schematische Darstellung der Vorrichtung mit der Anordnung aus Figur 1,
Figur 3    eine Anordnung mit einem Röntgenapparat und einem Zustandsensor,
Figur 4    eine schematische Darstellung der Vorrichtung mit der Anordnung aus Figur 3,
Figur 5    die Erzeugung des kumulativen Ähnlichkeitsmaßes und
Figur 6    mögliche Verläufe eines Strafmaßes.

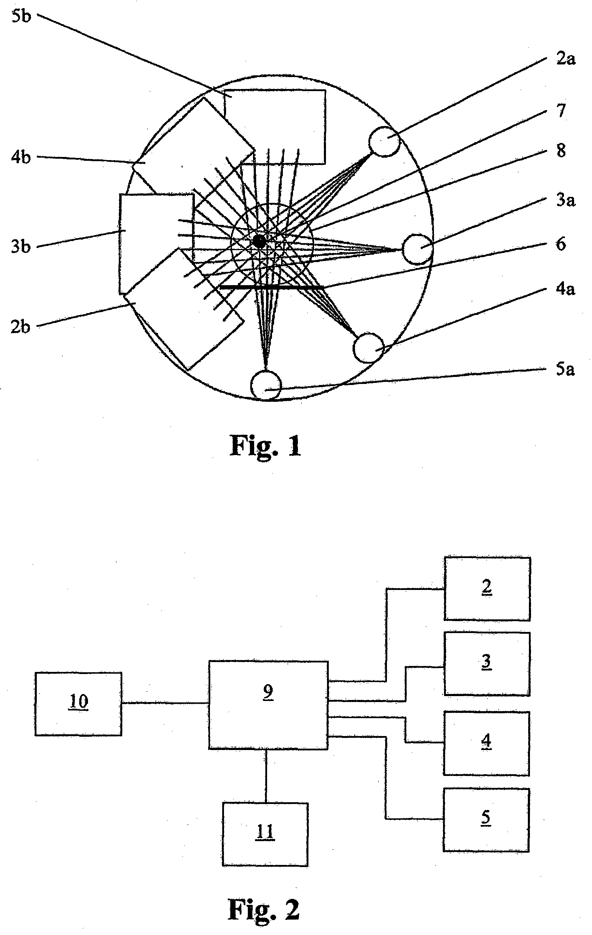

Die Figur 1 zeigt eine Anordnung aus vier Röntgenapparaten 2, 3, 4 und 5, wobei jeder Röntgenapparat aus einer Röntgenquelle 2a, 3a, 4a und 5a sowie einem einer Röntgenquelle zugeordneten Detektor 2b, 3b, 4b und 5b besteht. Die räumliche Anordnung der Röntgenapparate 2 bis 5 zueinander ist bekannt, beispielsweise bezogen auf einen Referenzpunkt oder ein Referenz-Koordinatensystem. Die Röntgenapparate erfassen einen Bereich oberhalb eines Tisches 6, der in der Figur 1 als Balken dargestellt ist. Auf dem Tisch 6 befindet sich ein als Kreis dargestellter Körper 8, der eine Struktur 7 enthält. Die Struktur 7 ist als Kreisscheibe dargestellt. Die Vorrichtung 1 dient dazu, die Lage der Struktur 7 im Körper 8, insbesondere in Bezug auf die Lage des Referenzpunktes oder eines Referenz-Koordinatensystems zu ermitteln. Das Referenz-Koordinatensystem ist z. B. anhand der Lage des Tisches 6 oder der Blickrichtungen der Röntgenapparate 2 bis 5 definiert.

Wie aus der Figur 2 ersichtlich ist, weist die Vorrichtung 1 eine Recheneinheit 9 auf, die mit den Röntgenapparaten 2, 3, 4 und 5 verbunden ist. Darüber hinaus ist die Recheneinheit 9 mit einem Speicher 10 und einem optionalen Strahlerzeuger 11 verbunden. "Verbunden sein" bedeutet, dass zwei Komponenten in zumindest eine Richtung Daten zueinander senden können. Der Speicher 10 dient dazu, der Recheneinheit 9 Daten bereitzustellen, beispielsweise 3D-Daten, die eine dreidimensionale Abbildung zumindest des Teils des Körpers 8, der die Struktur 7 enthält, repräsentieren.

Der Erfassungsbereich der Röntgenapparate 2 bis 5 ist in der Figur 1 durch jeweils fünf Strahlen schematisch dargestellt. Die Röntgenapparate arbeiten beispielsweise im kV- oder MV-Bereich. Der von den Röntgenquelle erzeugte Strahl hat beispielsweise die Form eine Konus. Im Betrieb erzeugen die vier Röntgenapparate 2 bis 5 gleichzeitig vier Röntgenabbildungen jeweils eines zumindest die Struktur 7 enthaltenden Teils des Körpers 8 aus einer bekannten Blickrichtung. Die Röntgenabbildungen werden von zugehörigen 2D-Bilddatensätzen repräsentiert. Die 2D-Bilddatensätze werden der Recheneinheit 9 von den Röntgenapparaten bereitgestellt. Dann erzeugt die Recheneinheit 9 virtuelle Röntgenbilder aus den 3D-Daten für eine virtuelle Lage der 3D-Daten bezogen auf die Referenz, beispielsweise den Tisch 6, wobei für jede Blickrichtung, für die ein 2D-Bilddatensatz bereitgestellt wurde, ein zugehöriges virtuelles Röntgenbild erzeugt wird. Anschließend werden die virtuellen Röntgenbilder, die von DRR-Datensätzen repräsentiert werden, paarweise mit den zugehörigen 2D-Bilddatensätzen verglichen und ein kumulatives Ähnlichkeitsmaß aus allen Vergleichen für die virtuelle Lage der 3D-Daten erzeugt. Dann werden für verschiedene virtuelle Lagen der 3D-Daten die Schritte Erzeugen der virtuellen Röntgenbilder, paarweises Vergleichen und Erzeugen des kumulativen Ähnlichkeitsmaßes wiederholt.

Das Erzeugen eines Ähnlichkeitsmaßes aus einem paarweisen Bildvergleich ist aus dem Stand der Technik bekannt und wird daher an dieser Stelle nicht detailliert erläutert. Für jeden Bildvergleich ergibt sich ein Wert als Ähnlichkeitsmaß, wobei die Werte für alle Bildpaare zu einem kumulativen Ähnlichkeitsmaß verknüpft werden. Bei der Verknüpfung werden die einzelnen Ähnlichkeitsmaße beispielsweise addiert oder miteinander multipliziert.

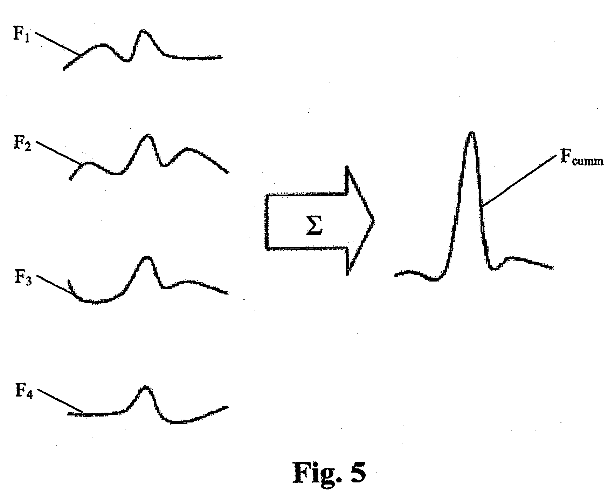

Die Figur 5 zeigt beispielhaft die Verläufe der einzelnen Ähnlichkeitsmaße $F_1$ bis $F_4$ von vier Bildpaaren über den Drehwinkel der 3D-Daten um eine Achse. In der Praxis setzt sich die virtuelle Lage der 3D-Daten aus bis zu drei translatorischen Verschiebungen und bis zu drei rotatorischen Drehungen zusammen. Ein Ähnlichkeitsmaß hängt demnach von bis zu sechs Parametern ab und repräsentiert demnach eine Wertemenge in einem maximal sechsdimensionalen Raum.

In der Figur 5 repräsentiert der Graph $F_1$ den Verlauf des Ähnlichkeitsmaßes des Vergleichs der Röntgenabbildung des Röntgenapparats 2 mit dem zugehörigen virtuellen Röntgenbild. Dementsprechend repräsentieren die Graphen $F_2$, $F_3$ und $F_4$ den Verlauf des Ähnlichkeitsmaßes des Bildvergleichs zwischen dem Röntgenbild des Röntgenapparat 3, 4 bzw. 5 mit dem jeweiligen zugehörigen virtuellen Röntgenbild.

Die Figur 5 zeigt weiterhin den Verlauf des kumulative Ähnlichkeitsmaßes $F_{cumm}$, das im vorliegenden Beispiel als Summe der vier Ähnlichkeitsmaße $F_1$ bis $F_4$ berechnet wird. Es wird deutlich, dass das Maximum dieses kumulativen Ähnlichkeitsmaßes stärker ausgeprägt ist als die Maxima der einzelnen Ähnlichkeitsmaße. Dies ist darin begründet, dass bei der Kumulierung Störgrößen wie beispielsweise der Einfluss von Bildrauschen oder störender Strukturen im Körper herausgemittelt wird.

Zuletzt wird die Lage der Struktur 7 aus derjenigen virtuellen Lage der 3D-Daten, die zu dem größten kumulativen Ähnlichkeitsmaß führt, ermittelt. Da die Blickrichtungen der vier Röntgenapparate 2 bis 5 und damit die Blickrichtungen der vier virtuellen Röntgenbilder bezogen auf die Referenz bekannt sind, ist auch die ausgewählte virtuelle Lage der 3D-Daten im Bezug auf die Referenz bekannt. Da die Lage der Struktur in den 3D-Daten bekannt ist, ist somit auch die Lage der Struktur bezogen auf die Referenz bekannt.

Optional wird das kumulative Ähnlichkeitsmaß zusätzlich mit einem Strafmaß versehen, beispielsweise durch Division oder Subtraktion. Das Strafmaß vergrößert sich beispielsweise mit zunehmender Abweichung der virtuellen Lage der 3D-Daten von einer Ausgangslage. Die Ausgangslage ist diejenige virtuelle Lage der 3D-Daten, die zu der Lage korrespondiert, in der sich der Körper 8 mit der größten Wahrscheinlichkeit befindet. Wenn sich der Körper 8 beispielsweise in Rückenlage auf dem Tisch 6 befindet, so wird die zu dieser Rückenlage korrespondierende virtuelle Lage als Ausgangslage für die 3D-Daten bei einer Rotation um die Wirbelsäulenachse der 3D-Daten angenommen. Durch die Anwendung des Strafmaßes wird das kumulative Ähnlichkeitsmaß derart verändert, dass unwahrscheinliche virtuelle Lagen der 3D-Daten, also Lagen, die stark von der Ausgangslage abweichen, zu einem geringeren kumulativen Ähnlichkeitsmaß führen.

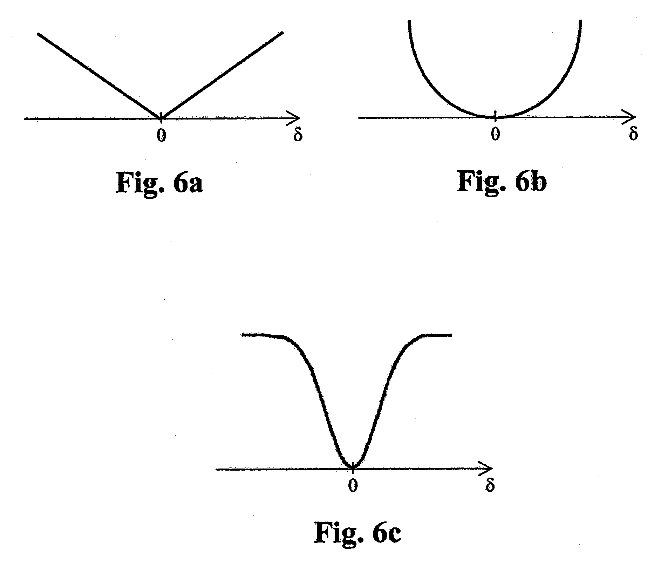

Mögliche Verläufe des Strafmaßes sind in der Figur 6 dargestellt. Das in der Figur 6a dargestellte Strafmaß nimmt mit zunehmender Abweichung δ von der Ausgangslage 0 linear zu, das in der Figur 6b dargestellte Strafmaß steigt exponentiell. Das in der Figur 6c dargestellte Strafmaß zeigt eine inverse Gaußverteilung. Es ist möglich, für jede Dimension der virtuellen Lage der 3D-Daten ein individuelles Strafmaß anzusetzen. So wird beispielsweise für eine virtuelle Drehung der 3D-Daten in der Transversalebene des Körpers 8 ein anderes Strafmaß verwendet als für eine Drehung in der Frontalebene.

Die Recheneinheit 9 ist weiterhin optional mit einem Sttahlerzeuger 11 verbunden. Der Strahlerzeuger dient beispielsweise der Bestrahlung, wenn es sich bei der Struktur 7 um einen Tumor handelt. Die Recheneinheit übermittelt bevorzugt die Lage des Tumors 7 an den Stahlerzeuger 11, der den Strahl anhand der übermittelten Lage des Tumors 7 ausrichtet.

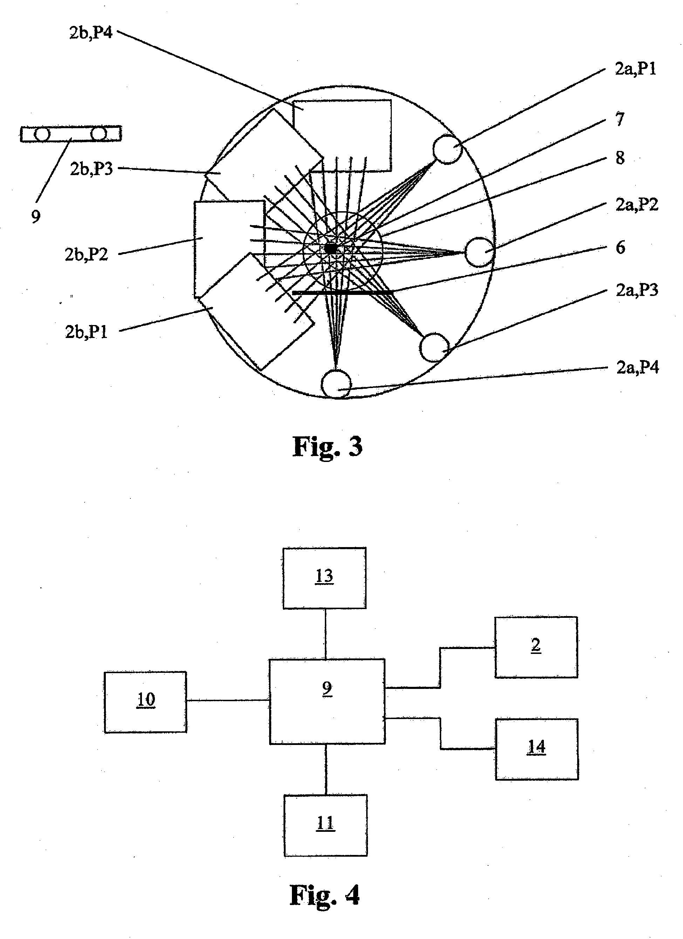

Die Figur 3 zeigt eine Anordnung einer Vorrichtung 12, die schematisch in Figur 4 dargestellt ist. Die Struktur der Vorrichtung 12 ähnelt derjenigen der Vorrichtung 1, so dass gleich wirkende Bestandteile mit gleichen Bezugszeichen versehen sind und nicht noch einmal erläutert werden. Im Unterschied zur Vorrichtung 1 verfügt die Vorrichtung 12 nur über einen Röntgenapparat 2 mit einer Röntgenquelle 2a und einem Detektor 2b. Die Blickrichtung des Röntgenapparats 2 ist jedoch mittels einer Stelleinheit 14, die mit der Recheneinheit 9 verbunden ist, veränderbar. Der Röntgenapparat 2 ist bevorzugt um eine Achse drehbar, so dass es sich bei der Stelleinheit 14 beispielsweise um einen Motor handelt.

Die Figur 3 zeigt den Röntgenapparat 2 in vier Positionen, so dass sich Röntgenabbildungen aus vier Blickrichtungen erzeugen lassen. Die vier Positionen sind durch die Bezugszeichen P1 bis P4 gekennzeichnet.

Für die Ermittlung der Lage der Struktur 7 ist es notwendig, dass die vier Röntgenabbildungen den Körper 8 jeweils im gleichen Zustand zeigen, da sich die Lage der Struktur 7 beispielsweise während des Atemzyklus verändern kann. Daher ist die Recheneinheit 9 zusätzlich mit einem Zustandssensor 13 verbunden. Der Zustandssensor 13 ist beispielsweise eine Infrarotkamera, die auf den Körper 8 gerichtet ist und zur Detektion des Zustands des Körpers 8 dient. Beispielsweise ermittelt die Infrarotkamera die Hebung und Senkung des Brustkorbs des Körpers 8 während des Atemvorgangs. Um die vier Röntgenabbildungen im gleichen Zustand des Körpers 8 zu gewinnen, wird die Röntgenabbildung in jeder der Positionen P1 bis P4 beispielsweise zu einem Zeitpunkt erzeugt, in dem sich der Körper 8 in einem definierten Zustand befindet. Dieser definierte Zustand ist beispielsweise ein Totpunkt des Atemzyklus, in dem der Patient voll ein- bzw. ausgeatmet hat. Eine weitere Möglichkeit besteht darin, in jeder der Positionen P1 bis P4 kontinuierlich Röntgenabbildungen zu erzeugen und diejenige Röntgenabbildung auszuwählen, die zu dem Zeitpunkt erzeugt wurde, in dem sich der Körper 8 in dem definierten Zustand befunden hat.

Es ist dem implementierenden Fachmann überlassen, inwieweit die Ermittlung des Zustands im Zustandssensor 13 oder der Recheneinheit 9 erfolgt. In einem Extremfall erzeugt der Zustandssensor 13 nur eine Bildfolge, die vollständig in der Recheneinheit 9 ausgewertet wird. Im anderen Extremfall erfolgt die Auswertung vollständig im Zustandssensor 13, der ausschließlich ein Triggersignal zur Erzeugung der Röntgenabbildung an die Recheneinheit 9 übermittelt.

Sind die Röntgenabbildungen in den vier Positionen P1 bis P4 erzeugt worden und in zugehörigen 2D-Bilddatensätzen gespeichert, so wird die Lage der Struktur 7 in gleicher Weise wie durch die Vorrichtung 1 ermittelt. Die Art der Vorrichtung beeinflusst ausschließlich die Art und Weise, wie die 2D-Bilddatensätze generiert werden, die für das erfindungsgemäße Verfahren bereitgestellt werden.

Bevorzugt wird das Zustandssignal des Zustandssensors 13 an den Strahlerzeuger 11 weitergeleitet. Dadurch wird erreicht, dass der Behandlungsstrahl nur eingeschaltet wird, wenn sich der Körper 8 in einem definierten Zustand und sich der Tumor somit in einer zugehörigen Lage befindet. Alternativ wird die Lage der Struktur 7 für verschiedene Zustände des Körpers 8 berechnet und der Strahl des Strahlerzeugers 11 je nach Zustand des Körpers 8, der vom Zustandssensor 13 ermittelt wird, nachgeführt. Beispielsweise wird die Lage der Struktur 7 in beiden Totpunkten des Atemzyklus berechnet und für die Zustände zwischen den beiden Totpunkten interpoliert.

## Patentansprüche

1. Verfahren zur Ermittlung der Lage einer Struktur in einem Körper mit den Verfahrensschritten

    Bereitstellen von 3D-Daten, die eine dreidimensionale Abbildung zumindest des Teils des Körpers (8), der die Struktur (7) enthält, repräsentieren

    Bereitstellen von mindestens zwei 2D-Bilddatensätzen, die jeweils eine Röntgenabbildung eines zumindest die Struktur (7) enthaltenden Teils des Körpers (8) aus einer bekannten Blickrichtung repräsentieren

    Erzeugen von virtuellen Röntgenbildern aus den 3D-Daten für eine virtuelle Lage der 3D-Daten, wobei für jede Blickrichtung, für die ein 2D-Bilddatensatz bereitgestellt wurde, ein zugehöriges virtuelles Röntgenbild erzeugt wird paarweises Vergleichen der virtuellen Röntgenbilder mit den zugehörigen 2D-Bilddatensätzen und Erzeugen eines kumulativen Ähnlichkeitsmaßes ($F_{cumm}$) aus allen Vergleichen für die virtuelle Lage der 3D-Daten

    Wiederholen der Schritte Erzeugen von virtuellen Röntgenbildern, paarweises Vergleichen und Erzeugen eines kumulativen Ähnlichkeitsmaßes für verschiedene virtuelle Lagen der 3D-Daten und

    Ermittlung der Lage der Struktur (7) im Körper (8) aus derjenigen virtuellen Lage der 3D-Daten, die zu dem größten kumulativen Ähnlichkeitsmaß führt, **dadurch gekennzeichnet, dass** in das kumulative Ähnlichkeitsmaß ($F_{cumm}$) zusätzlich ein Strafmaß eingeht, das von der Abweichung der jeweiligen virtuellen Lage der 3D-Daten von einer Ausgangslage abhängt.

2. Verfahren nach Anspruch 1, **dadurch gekennzeichnet, dass** die Röntgenabbildungen, die von den 2D-Bilddatensätzen repräsentiert werden, den Körper (8) jeweils im gleichen Zustand repräsentieren, indem gleichzeitig mehrere Röntgenabbildungen aus verschiedenen Blickrichtungen erzeugt werden.

3. Verfahren nach Anspruch 1 oder 2, **dadurch gekennzeichnet, dass** die Röntgenabbildungen, die von den 2D-Bilddatensätzen repräsentiert werden, den Körper jeweils im gleichen Zustand repräsentieren, indem der Zustand des Körpers (8) überwacht wird und die Röntgenabbildungen erzeugt werden, wenn sich der Körper in einem festgelegten Zustand befindet.

4. Verfahren nach einem der Ansprüche 1 bis 3, **dadurch gekennzeichnet, dass** das kumulative Ähnlichkeitsmaß ($F_{cumm}$) als die Summe der einzelnen Ähnlichkeitsmaße ($F_1$, $F_2$, $F_3$, $F_4$) der paarweisen Vergleiche berechnet wird.

5. Verfahren nach einem der Ansprüche 1 bis 3, **dadurch gekennzeichnet, dass** das kumulative Ähnlichkeitsmaß ($F_{cumm}$) als das Produkt der einzelnen Ähnlichkeitsmaße ($F_1$, $F_2$, $F_3$, $F_4$) der paarweisen Vergleiche berechnet wird.

**6.** Verfahren nach einem der Ansprüche 1 bis 5, **dadurch gekennzeichnet, dass** die 3D-Daten vor der Erzeugung der virtuellen Röntgenbilder segmentiert werden.

**7.** Verfahren nach einem der Ansprüche 1 bis 6, **dadurch gekennzeichnet, dass** die virtuellen Röntgenbilder vor dem paarweisen Vergleich maskiert werden.

**8.** Verfahren nach einem der Ansprüche 1 bis 7, **dadurch gekennzeichnet, dass** die 3D-Daten in Bereichen, die die Struktur nicht enthalten, vor der Erzeugung der virtuellen Röntgenbilder modifiziert werden.

**9.** Verfahren nach einem der Ansprüche 1 bis 8, **dadurch gekennzeichnet, dass** die 3D-Daten vor der Erzeugung der virtuellen Röntgenbilder gefiltert werden.

**10.** Vorrichtung (1, 12) zur Ermittlung der Lage einer Struktur (7) in einem Körper (8), aufweisend
eine Schnittstelle, die dazu eingerichtet ist, 3D-Daten zu empfangen, die eine dreidimensionale Abbildung zumindest des Teils des Körpers (8), der die Struktur (7) enthält, repräsentieren, und mindestens zwei 2D-Bilddatensätze zu empfangen, die jeweils eine Röntgenabbildung eines zumindest die Struktur (7) enthaltenden Teils des Körpers (8) aus einer bekannten Blickrichtung repräsentieren
eine Recheneinheit (9), die dazu eingerichtet ist, virtuelle Röntgenbilder aus den 3D-Daten für eine virtuelle Lage der 3D-Daten zu erzeugen, wobei für jede Blickrichtung, für die ein 2D-Bilddatensatz bereitgestellt wurde, ein zugehöriges virtuelles Röntgenbild erzeugt wird, die virtuellen Röntgenbilder paarweise mit den zugehörigen 2D-Bilddatensätzen zu vergleichen und ein kumulatives Ähnlichkeitsmaß ($F_{cumm}$) aus allen Vergleichen für die virtuelle Lage der 3D-Daten zu erzeugen,
wobei die Recheneinheit (9) weiter dazu ausgebildet ist, die Schritte Erzeugen von virtuellen Röntgenbildern, paarweises Vergleichen und Erzeugen eines kumulativen Ähnlichkeitsmaßes für verschiedene virtuelle Lagen der 3D-Daten zu wiederholen und die Lage der Struktur (7) im Körper (8) aus derjenigen virtuellen Lage der 3D-Daten, die zu dem größten kumulativen Ähnlichkeitsmaß ($F_{cumm}$) führt, zu ermitteln, **dadurch gekennzeichnet, dass** in das kumulative Ähnlichkeitsmaß ($F_{cumm}$) zusätzlich ein Strafmaß eingeht, das von der Abweichung der jeweiligen virtuellen Lage der 3D-Daten von einer Ausgangslage abhängt.

**11.** Vorrichtung (1, 12) nach Anspruch 10, **gekennzeichnet durch** mindestens zwei Röntgenapparate (2, 3, 4, 5) mit bekannter geometrischer Anordnung zueinander.

**12.** Vorrichtung (12) nach einem der Ansprüche 10 oder 11, **gekennzeichnet durch** einen Sensor (13) zur Überwachung des Zustands des Körpers (8).

**13.** Computerprogramm, das, wenn es auf einer Datenverarbeitungseinrichtung (9) ausgeführt wird, die Datenverarbeitungseinrichtung dazu veranlasst, das Verfahren nach einem der Ansprüche 1 bis 9 durchzuführen.

**Claims**

**1.** A method for determining the position of a structure in a body, comprising the method steps of:

- providing 3D data which represents a three-dimensional image of at least the part of the body (8) which contains the structure (7);
- providing at least two 2D image data sets which each represent an x-ray image of a part of the body (8) containing at least the structure (7), from a known viewing direction;
- generating virtual x-ray images from the 3D data for a virtual position of the 3D data, wherein for each viewing direction for which a 2D image data set has been provided, a corresponding virtual x-ray image is generated;
- comparing the virtual x-ray images in pairs with the corresponding 2D image data sets and generating a cumulative degree of similarity ($F_{cumm}$) for the virtual position of the 3D data from all the comparisons;
- repeating the steps of generating virtual x-ray images, comparing in pairs and generating a cumulative degree of similarity for different virtual positions of the 3D data; and
- determining the position of the structure (7) in the body (8) from the virtual position of the 3D data which results in the greatest cumulative degree of similarity, **characterized in that** a penalty additionally enters into the cumulative degree of similarity (Fcumm) which depends on the deviation of the respective virtual position of the 3D data from an initial position.

**2.** The method according to claim 1, **characterized in that** the x-ray images represented by the 2D image data sets each represent the body (8) in the same state, by simultaneously generating a plurality of x-ray images from different viewing directions.

**3.** The method according to claim 1 or 2, **characterized in that** the x-ray images represented by the 2D image data sets each represent the body in the same state, by monitoring the state of the body (8) and generating the x-ray images when the body is situated in a defined state.

**4.** The method according to one of claims 1 to 3, **characterized in that** the cumulative degree of similarity (Fcumm) is calculated as the sum of the individual degrees of similarity ($F_1$ $F_2$, $F_3$, $F_4$) of the comparisons in pairs.

**5.** The method according to one of claims 1 to 3, **characterized in that** the cumulative degree of similarity ($F_{cumm}$) is calculated as the product of the individual degrees of similarity ($F_1$, $F_2$, $F_3$, $F_4$) of the comparisons in pairs.

**6.** The method according to one of claims 1 to 5, **characterized in that** the 3D data is segmented before generating the virtual x-ray images.

**7.** The method according to one of claims 1 to 6, **characterized in that** the virtual x-ray images are masked before the comparison in pairs.

**8.** The method according to one of claims 1 to 7, **characterized in that** the 3D data is modified in regions which do not contain the structure, before generating the virtual x-ray images.

**9.** The method according to one of claims 1 to 8, **characterized in that** the 3D data is filtered before generating the virtual x-ray images.

**10.** A device (1, 12) for determining the position of a structure (7) in a body (8), comprising:

- an interface, designed to receive 3D data which represents a three-dimensional image of at least the part of the body (8) which contains the structure (7), and to receive at least two 2D image data sets which each represent an x-ray image of a part of the body (8) containing at least the structure (7), from a known viewing direction;
- a computational unit (9), designed to: generate virtual x-ray images from the 3D data for a virtual position of the 3D data, wherein for each viewing direction for which a 2D image data set has been provided, a corresponding virtual x-ray image is generated; compare the virtual x-ray images in pairs with the corresponding 2D image data sets; and generate a cumulative degree of similarity ($F_{cumm}$) for the virtual position of the 3D data, from all the comparisons,

wherein the computational unit is also designed to repeat the steps of generating virtual x-ray images, comparing in pairs and generating a cumulative degree of similarity for different virtual positions of the 3D data, and to determine the position of the structure (7) in the body (8) from the virtual position of the 3D data which results in the greatest cumulative degree of similarity ($F_{cumm}$), **characterized in that** a penalty additionally enters into the cumulative degree of similarity ($F_{cumm}$) which depends on the deviation of the respective virtual position of the 3D data from an initial position.

**11.** The device (1, 12) according to claim 10, comprising at least two x-ray apparatuses (2, 3, 4, 5) which have a known geometric arrangement with respect to each other.

**12.** The device (12) according to one of claims 10 or 11, **characterized by** a sensor (13) for monitoring the state of the body (8).

**13.** A computer program which, when it is executed on a data processing device (9), causes the data processing device to perform the method according to one of claims 1 to 9.

**Revendications**

**1.** Procédé de détermination de la position d'une structure dans un corps comportant les étapes consistant à :

- fournir des données 3D qui représentent une image tridimensionnelle au moins de la partie du corps (8) contenant la structure (7) ;
- fournir au moins deux ensembles de données d'image 2D qui représentent respectivement une image radiographique d'une partie du corps (8) contenant au moins la structure (7) prise selon une direction de prise de vue connue ;
- produire des images radiographiques virtuelles à partir des données 3D, pour une position virtuelle des données 3D, où une image radiographique virtuelle associée est générée pour chaque direction de prise de vue pour laquelle un ensemble de données d'image 2D a été fourni;
- comparer par paires les images radiographiques virtuelles avec les ensembles de données d'image 2D associés et générer une mesure de similarité cumulative ($F_{cumm}$) à partir de toutes les comparaisons, pour la position virtuelle des données 3D;
- répéter les étapes de production d'images radiographiques virtuelles, de comparaison par paires et de génération d'une mesure de similarité cumulative pour diverses positions virtuelles des données 3D ;
- déterminer la position de la structure (7) dans le corps (8) à partir de la position virtuelle des données 3D qui conduit à la plus grande mesure de similarité cumulative, **caractérisé en ce qu'**une pénalité qui dépend de la déviation des positions virtuelles respectives des données 3D de leur position initiale est ajoutée à la mesure de similarité cumulative ($F_{cumm}$).

2. Procédé selon la revendication 1, **caractérisé en ce que** les images radiographiques représentées par les ensembles de données d'image 2D représentent respectivement le corps (8) dans le même état, plusieurs images radiographiques étant prises simultanément selon différentes directions de prise de vue.

3. Procédé selon la revendication 1 ou 2, **caractérisé en ce que** les images radiographiques représentées par les ensembles de données d'image 2D représentent respectivement le corps dans le même état, l'état du corps (8) étant surveillé et les images radiographiques étant prises quand le corps est dans un état prédéterminé.

4. Procédé selon l'une des revendications 1 à 3, **caractérisé en ce que** la mesure de similarité cumulative ($F_{cumm}$) est calculée en faisant la somme des mesures de similarité ($F_1$, $F_2$, $F_2$, $F_4$) des comparaisons par paire.

5. Procédé selon l'une des revendications 1 à 3, **caractérisé en ce que** la mesure de similarité cumulative ($F_{cumm}$) est calculée en faisant le produit des mesures de similarité ($F_1$, $F_2$, $F_2$, $F_4$) des comparaisons par paire.

6. Procédé selon l'une des revendications 1 à 5, **caractérisé en ce que** les données 3D sont segmentées avant la production des images radiographiques virtuelles.

7. Procédé selon l'une des revendications 1 à 6, **caractérisé en ce que** les images radiographiques virtuelles sont masquées avant la comparaison par paires.

8. Procédé selon l'une des revendications 1 à 7, **caractérisé en ce que** les données 3D concernant des zones qui ne contiennent pas la structure sont modifiées avant la production des images radiographiques virtuelles.

9. Procédé selon l'une des revendications 1 à 8, **caractérisé en ce que** les données 3D sont filtrées avant la production des images radiographiques virtuelles.

10. Dispositif (1, 12) pour la détermination de la position d'une structure (7) dans un corps (8), comportant :

- une interface conçue pour recevoir des données 3D qui représentent une image tridimensionnelle d'au moins une partie du corps (8) contenant la structure (7) et au moins deux ensembles de données d'image 2D qui représentent respectivement une image radiographique d'une partie du corps (8) contenant au moins la structure (7) prise selon une direction de prise de vue connue ;
- une unité de calcul (9) conçue pour produire des images radiographiques virtuelles à partir des données 3D pour une position virtuelle des données 3D, où une image radiographique virtuelle associée est générée pour chaque direction de prise de vue pour laquelle un ensemble de données d'image 2D a été fourni, pour comparer les images radiographiques virtuelles par paires avec les ensembles de données d'image 2D associés et pour générer une mesure de similarité cumulative ($F_{cumm}$) à partir de toutes les comparaisons pour la position virtuelle des données 3D,

où l'unité de calcul (9) est conçue en outre pour répéter les étapes de production d'images radiographiques virtuelles, de comparaison par paires et de génération d'une mesure de similarité cumulative pour diverses positions virtuelles des données 3D et pour déterminer la position de la structure (7) dans le corps (8) à partir de la position virtuelle des données 3D qui conduit à la plus grande mesure de similarité cumulative ($F_{cumm}$), **caractérisé en ce qu'**une pénalité qui dépend de la déviation des positions virtuelles respectives des données 3D de leur position initiale est ajoutée à la mesure de similarité cumulative ($F_{cumm}$).

11. Dispositif (1, 12) selon la revendication 10, **caractérisé par** au moins deux appareils de radiographie (2, 3, 4, 5) dont la disposition géométrique relative est connue.

12. Dispositif (12) selon l'une des revendications 10 ou 11, **caractérisé par** un capteur (13) pour surveiller l'état du corps (8).

13. Programme d'ordinateur qui, lorsqu'il est exécuté dans un dispositif de traitement de données (9), provoque l'exécution par le dispositif de traitement de données du procédé selon l'une des revendications 1 à 9.

5b

2a

7

8

4b

3a

6

3b

2b

4a

5a

**Fig. 1**

10 — 9 — 2

3

11 — 4

5

**Fig. 2**

**Fig. 3**

**Fig. 4**

$F_1$

$F_2$

$F_3$

$F_4$

$\Sigma$

$F_{cumm}$

**Fig. 5**

**Fig. 6a**

**Fig. 6b**

**Fig. 6c**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **DANIEL B. RUSSAKOFF et al.** Intensity-Based 2D-3D-Spine Image Registration Incorporating a Single Fiducial Marker. *Academic Radiology,* vol. 12 (1
- **DONGSHAN FU et al.** Fiducial-less 2D-3D Spine Image Registration Using Spine Region Segmented in CT Image. *Progress in Miomedical Optics and Imaging - Proceedings of Spie - Medical Imaging 2007: Visualization and Image-Guided Procedures 2007,* 2007, vol. 6509
- A Gradient Feature Weighted Minimax Algorithm for Registration of Multiple Portal Images to 3DCT Volumes in Prostate Radiotherapy. **SUDHAKAR CHELIKANI et al.** International Journal of Radiation: Oncology Biology Physics. Pergamon Press, 01. Juni 2006, vol. 65